# EUROPÄISCHE PATENTSCHRIFT

(11) **EP 4 048 827 B1**
(45) Veröffentlichungstag und Bekanntmachung des Hinweises auf die Patenterteilung: **24.09.2025**
(21) Anmeldenummer: 20788768.8
(22) Anmeldetag: 07.10.2020
(51) Int. Cl.: C25B 1/042, C25B 1/23

(54) **VERFAHREN UND VORRICHTUNG ZUR HERSTELLUNG EINES SYNTHESEGASES UMFASSEND KOHLENMONOXID UND WASSERSTOFF**
METHOD AND DEVICE FOR THE PRODUCTION OF A SYNTHESIS GAS COMPRISING CARBON MONOXIDE AND HYDROGEN
MÉTHODE ET DISPOSITIF DE PRODUCTION D'UN GAZ DE SYNTHÈSE CONTENANT DU MONOXYDE DE CARBONE ET DE L'HYDROGÈNE

(30) Priorität: 25.10.2019 DE 102019128934
(43) Veröffentlichungstag der Anmeldung: 31.08.2022
(73) Patentinhaber: Forschungszentrum Jülich GmbH, 52425 Jülich (DE)
(72) Erfinder: FOIT, Severin, 52441 Linnich (DE); DE HAART, L.G.J., 6291 EA Vaals (NL); EICHEL, Rüdiger-A., 52428 Jülich (DE)
(74) Vertreter: Schwenderling, Jens
(86) Internationale Anmeldenummer: PCT/EP2020/078130
(87) Internationale Veröffentlichungsnummer: WO 2021/078517

(56) Entgegenhaltungen:
- EP-A1- 3 511 441
- WO-A2-2018/069503
- GB-A- 2 568 564
- US-A1- 2015 376 801
- ZHONGLIANG ZHAN ET AL: "Syngas Production By Coelectrolysis of CO 2 /H 2 O: The Basis for a Renewable Energy Cycle", ENERGY & FUELS, vol. 23, no. 6, 18 June 2009 (2009-06-18), pages 3089 - 3096, XP055132770, ISSN: 0887-0624, DOI: 10.1021/ef900111f

## Beschreibung

Die vorliegende Erfindung betrifft ein Verfahren und eine Vorrichtung zur Herstellung eines Synthesegases umfassend Kohlenmonoxid und Wasserstoff, siehe Ansprüche 1 und 5.

Ein Synthesegas umfassend Kohlenmonoxid und Wasserstoff enthält die zur Produktion von wichtigen organischen Chemikalien erforderlichen Elemente Kohlenstoff, Sauerstoff und Wasserstoff. Damit eignet sich dieses Synthesegas für viele petrochemische Prozesse, beispielsweise zur Herstellung von synthetischem Brennstoff, Erdgas, Methanol oder Formaldehyd. Damit eignet sich dieses Synthesegas dazu, fossile Rohstoffe zu ersetzen. Dies kann einen wichtigen Beitrag zur Energiewende leisten. Insbesondere kann synthetischer Brennstoff zum umweltfreundlichen Antrieb von Kraftfahrzeugen dienen, ohne dass umfangreiche Änderungen der Konstruktion der Kraftfahrzeuge erforderlich wären.

Es besteht also ein Bedarf daran, Synthesegas umfassend Kohlenmonoxid und Wasserstoff zu erzeugen. Aus dem Stand der Technik sind Verfahren dazu bekannt. Insbesondere kann das Synthesegas unter Energiezufuhr durch Elektrolyse aus gasförmigem Kohlendioxid und Wasserdampf erhalten werden. Dieser Prozess ist als *"Co-Elektrolyse "* bekannt. Dieses gehört zum Konzept *"Power-to-X",* bei dem aus Energie *("Power")* eine Chemikalie *("X")* erhalten wird. Durch Verwendung des klimaschädlichen Kohlendioxids als Ausgangsstoff und bei Nutzung erneuerbarer Energie kann dieses Konzept zur Reduzierung der Erderwärmung beitragen.

Bekannte Verfahren zur Herstellung von Synthesegas mittels Co-Elektrolyse haben einen geringen Wirkungsgrad, insbesondere weil für diese Wasser verdampft werden muss.

Aus der EP 3 511 441 A1 ist ein Verfahren zur Herstellung eines zumindest Kohlenmonoxid enthaltenden Gasprodukts bekannt. Aus der US 2015/0376801 A1 ist ein Hochdruckprozess zur Gewinnung von Kohlendioxid bekannt. Aus dem Artikel ZHONGLIANG ZHAN ET AL, "Syngas Production By Coelectrolysis of CO2/H2O: The Basis for a Renewable Energy Cycle", ENERGY & FUELS, (20090618), vol. 23, no. 6, doi:10.1021/ef900111f, ISSN 0887-0624, pages 3089 - 3096, XP055132770 ist ein Verfahren zur Herstellung eines Synthesegases bekannt. Aus der WO 2018/069 503 A2 ist ein Verfahren zur Herstellung von Methan bekannt. Aus der GB 2 568 564 A ist ein Verfahren zur Umwandlung von Kohlendioxid bekannt.

Hiervon ausgehend liegt der vorliegenden Erfindung die Aufgabe zugrunde, die aus dem Stand der Technik bekannten Probleme zumindest teilweise zu überwinden und insbesondere ein Verfahren und eine Vorrichtung zur Herstellung eines Synthesegases umfassend Kohlenmonoxid und Wasserstoff vorzustellen, mit denen ein verbesserter Wirkungsgrad erzielt werden kann.

Diese Aufgaben werden gelöst mit den Merkmalen der unabhängigen Ansprüche 1 und 5, d.h. Verfahren und Vorrichtung zur Herstellung eines Synthesegases umfassend Kohlenmonoxid und Wasserstoff. Weitere vorteilhafte Ausgestaltungen der Erfindung sind in den abhängig formulierten Ansprüchen angegeben.

Erfindungsgemäß wird ein Verfahren zur Herstellung eines Synthesegases umfassend Kohlenmonoxid und Wasserstoff vorgestellt, siehe Anspruch 1

Mit dem beschriebenen Verfahren kann ein Synthesegas hergestellt werden, welches Kohlenmonoxid und Wasserstoff enthält. Dieses Synthesegas eignet sich für viele petrochemische Prozesse, beispielsweise zur Herstellung von synthetischem Brennstoff, Erdgas, Methanol oder Formaldehyd. Das beschriebene Verfahren gehört zum Konzept des *"Power-to-X".*

Das Synthesegas wird bei dem beschriebenen Verfahren durch Elektrolyse aus Kohlendioxid und Wasserdampf erhalten (Schritt c)). Die Ausgangsstoffe für die Elektrolyse (Kohlendioxid und Wasserdampf) entstehen bei dem beschriebenen Verfahren als Zwischenprodukt aus einem Eduktgas umfassend Methan und Kohlendioxid (Schritt b)).

Bei dem beschriebenen Verfahren sind zwei chemische Prozesse miteinander gekoppelt: einerseits wird aus dem Eduktgas das Zwischenproduktgas erhalten (Schritt b)). Andererseits wird aus dem Zwischenproduktgas das Synthesegas hergestellt (Schritt c)). Diese beiden Prozesse sind dadurch miteinander gekoppelt, dass das Produkt des ersten Prozesses (das Zwischenproduktgas umfassend Kohlendioxid und Wasserdampf) als Edukt für den zweiten Prozess verwendet wird. Dadurch kann ein besonders hoher Wirkungsgrad erzielt werden, insbesondere weil das Zwischenproduktgas Wasserdampf enthält. Es ist also nicht erforderlich, Wasser für die Elektrolyse zu verdampfen.

Die Schritte b) und c) des beschriebenen Verfahrens werden vorzugsweise bei einer Temperatur im Bereich von 700 bis 900 °C durchgeführt. Dazu wird das Eduktgas vorzugsweise in Schritt a) mit dieser Temperatur bereitgestellt oder auf die Temperatur erwärmt oder abgekühlt. Während der Durchführung der Schritte b) und c) wird die Temperatur vorzugsweise im Bereich von 750 und 850 °C gehalten.

In Schritt a) wird das Eduktgas bereitgestellt. Das Eduktgas umfasst Methan und Kohlendioxid. Daneben kann das Eduktgas weitere Bestandteile umfassen, beispielsweise Wasserdampf. Vorzugsweise hat das Eduktgas einen Methan-Anteil von mindestens 30 %, insbesondere von mindestens 50 %. Vorzugsweise hat das Eduktgas einen Kohlendioxid-Anteil von mindestens 15 %, insbesondere von mindestens 30 %. Bevorzugt ist die Kombination, dass das Eduktgas einen Methan-Anteil von mindestens 50 % und einen Kohlendioxid-Anteil von mindestens 30 % aufweist.

In Schritt b) wird das Eduktgas zu dem Zwischenproduktgas umfassend Kohlendioxid und Wasserdampf umgesetzt. Das erfolgt vorzugsweise in einer Brennstoffzelle. Mit dem Eduktgas wird der Brennstoffzelle das Brenngas zugeführt. Die Brennstoffzelle weist vorzugsweise eine Anode und eine Kathode auf, die zumindest durch einen Elektrolyten voneinander getrennt sind. Weiterhin weist die Brennstoffzelle vorzugsweise einen Anodenraum auf, der an die Anode angrenzt, so dass ein Gas entlang der Anode durch den Anodenraum strömen kann. Weiterhin weist die Brennstoffzelle vorzugsweise einen Kathodenraum auf, der an die Kathode angrenzt, so dass ein Gas entlang der Kathode durch den Kathodenraum strömen kann.

Vorzugsweise wird das Eduktgas in den Anodenraum der Brennstoffzelle eingeleitet. An der Kathode der Brennstoffzelle wird vorzugsweise Sauerstoff bereitgestellt. Dazu kann beispielsweise Sauerstoff, Luft oder ein Gemischt aus Stickstoff und Sauerstoff in den Kathodenraum eingeleitet werden.

An der Kathode kann der Sauerstoff reduziert werden:

O₂+ 4e⁻ → 2 O²⁻(g) (1)

Nach dieser Reaktionsgleichung wird ein Molekül gasförmigen Sauerstoffs (O₂) unter Aufnahme von vier Elektronen (e⁻) zu zwei Sauerstoff-Ionen (O²⁻) umgesetzt.

Der Elektrolyt ist vorzugsweise für Sauerstoff-Ionen (O²⁻) durchlässig, nicht aber für Gasmoleküle wie beispielsweise CO₂, CO, H₂O oder H₂. Die Sauerstoff-Ionen (O²⁻) können also vom Kathodenraum in den Anodenraum gelangen. Dadurch kann das Methan aus dem Eduktgas an der Anode zu dem Zwischenproduktgas umgesetzt werden:

CH₄(g) + 4 O²⁻ → 2 H₂O(g) + CO₂(g) + 8e⁻ (2)

Nach dieser Reaktionsgleichung wird ein Molekül gasförmigen Methans (CH₄) mit vier Sauerstoff-Ionen (O²⁻) zu zwei Wasserdampf-Molekülen (H₂O) und einem gasförmigen Molekül Kohlendioxid (CO₂) umgesetzt, wobei acht Elektronen (e⁻) abgegeben werden.

Für die Brennstoffzelle ergibt sich mit den Reaktionsgleichungen (1) und (2) folgende Bilanzgleichung, wobei Reaktionsgleichung (1) doppelt berücksichtigt wird:

CH₄(g) + 2 O₂ → 2 H₂O(g) + CO₂(g) (3)

Auf der rechten Seite dieser Bilanzgleichung stehen die Bestandteile Wasserdampf und Kohlendioxid des Zwischenproduktgases. Das Zwischenproduktgas besteht vorzugsweise ausschließlich aus diesen Bestandteilen.

Mit der Brennstoffzelle wird elektrische Energie erzeugt, die an der Kathode und der Anode der Brennstoffzelle abgegriffen werden kann.

In Schritt c) wird das Zwischenproduktgas (umfassend Kohlendioxid und Wasserdampf) durch Elektrolyse zu dem Synthesegas (umfassend Kohlenmonoxid und Wasserstoff) umgesetzt. Das erfolgt in einer Elektrolysezelle, insbesondere nach Art der Co-Elektrolyse. Die Elektrolysezelle weist vorzugsweise eine Anode und eine Kathode auf, die zumindest durch einen Elektrolyten voneinander getrennt sind. Neben dem Elektrolyten können weitere Schichten zwischen der Anode und der Kathode angeordnet sein. Vorzugsweise ist die Elektrolysezelle substratgestützt oder elektrolytgestützt ausgebildet. Als substratgestützte Ausbildung ist bevorzugt, dass die Kathode als eine Ni-YSZ-Elektrode ausgebildet ist, der Elektrolyt aus YSZ gebildet ist, eine Barriereschicht aus CGO zwischen dem Elektrolyten und der Anode angeordnet ist und die Anode aus LSC gebildet ist. Alternativ ist als elektrolytgestützte Ausbildung bevorzugt, dass die Kathode als eine Ni-CGO-Elektrode ausgebildet ist, der Elektrolyt aus YSZ gebildet ist, eine Barriereschicht aus CGO zwischen dem Elektrolyten und der Anode angeordnet ist und die Anode aus LSCF gebildet ist.

Weiterhin weist die Elektrolysezelle vorzugsweise einen Anodenraum auf, der an die Anode angrenzt. Im Anodenraum kann ein Gas an der Anode entlang strömen. Weiterhin weist die Elektrolysezelle vorzugsweise einen Kathodenraum auf, der an die Kathode angrenzt. Im Kathodenraum kann ein Gas an der Kathode entlang strömen. Anodenraum und/oder Kathodenraum weisen vorzugsweise jeweils einen Einlass und einen Auslass auf.

Das Zwischenproduktgas umfassend Kohlendioxid und Wasserdampf wird vorzugsweise im gasförmigen Zustand über den Einlass des Kathodenraums der Elektrolysezelle in den Kathodenraum der Elektrolysezelle eingeleitet, so dass das Eduktgas an der Kathode der Elektrolysezelle entlang strömen kann. Ist zwischen Anode und Kathode der Elektrolysezelle ein elektrischer Strom angelegt, wird das Kohlendioxid aus dem Eduktgas an der Kathode der Elektrolysezelle nach folgender chemischer Gleichungen reduziert:

CO₂(g) + 2e⁻ → CO(g) + O²⁻ (4)

Nach dieser Reaktionsgleichung wird ein Molekül gasförmigen Kohlendioxids (CO₂) unter Aufnahme zweier Elektronen (e⁻) zu einem Molekül gasförmigen Kohlenmonoxids (CO) und einem Sauerstoff-Ion (O²⁻) umgesetzt.

Zudem wird der Wasserdampf aus dem Eduktgas an der Kathode nach folgender chemischer Gleichungen reduziert:

H₂O(g) + 2e⁻ → H₂(g) + O²⁻ (5)

Nach dieser Reaktionsgleichung wird ein Wasserdampf-Molekül (H₂O) unter Aufnahme zweier Elektronen (e⁻) zu einem Molekül gasförmigen Wasserstoffs (H₂) und einem Sauerstoff-Ion (O²⁻) umgesetzt.

Der Elektrolyt ist vorzugsweise für Sauerstoff-Ionen (O²⁻) durchlässig, nicht aber für Gasmoleküle wie beispielsweise CO₂, CO, H₂O oder H₂. Die Sauerstoff-Ionen (O²⁻) können also vom Kathodenraum in den Anodenraum gelangen. Dort kann folgende Oxidationsreaktion ablaufen:

2 O²⁻ → O₂(g) + 4e⁻ (6)

Nach dieser Reaktionsgleichung werden zwei Sauerstoff-Ionen (O²⁻) zu einem Molekül gasförmigen Sauerstoffs (O₂) umgesetzt, wobei vier Elektronen (e⁻) freigesetzt werden.

Über eine Spannungsquelle können Elektronen von der Anode zur Kathode bewegt werden. Die Gleichungen (4), (5) und (6) ergeben somit folgende Bilanzgleichung für die Elektrolysezelle:

H₂O + CO₂ → H₂ + CO + O₂ (7)

Mit der Elektrolysezelle kann also unter Energiezufuhr aus Wasserdampf und Kohlendioxid ein Synthesegas aus Wasserstoff und Kohlenmonoxid erhalten werden. Dieses entsteht an der Kathode der Elektrolysezelle und kann über einen Auslass des Kathodenraums der Elektrolysezelle abgeleitet werden. Weiterhin wird im Anodenraum der Elektrolysezelle Sauerstoff gebildet, der über den Auslass des Anodenraums der Elektrolysezelle abgeleitet werden kann. Das Synthesegas und der Sauerstoff können also getrennt voneinander erhalten werden.

Im Kathodenraum der Elektrolysezelle kann folgende chemische Reaktion ablaufen:

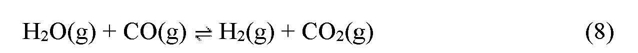

Bei dieser auch als "reversible water gas shift" bekannten Reaktion handelt es sich um eine Gleichgewichtsreaktion, so dass auch Kohlendoxid und Wasserstoff zu Kohlenmonoxid und Wasser reagieren können. Durch die Elektrolyse wird Kohlendioxid (CO₂) nach Reaktionsgleichung (4) zu Kohlenmonoxid reduziert und Wasserdampf (H₂O) nach Reaktionsgleichung (5) zu Wasserstoff (H₂). Dadurch werden die Anteile in Reaktionsgleichung (8) verändert, so dass das chemische Gleichgewicht gestört ist. Dies kann die Bildung von Wasserdampf (H₂O) und Kohlenmonoxid (CO) aus Wasserstoff (H₂) und Kohlendioxid (CO₂) bewirken. Die Co-Elektrolyse von Kohlendioxid mit Wasserdampf ist also besonders effizient, weil mit bei der Elektrolyse gebildetem Wasserstoff die Umsetzung von Kohlendioxid zu Kohlenmonoxid zusätzlich unterstützt werden kann.

Das Synthesegas kann wegen Reaktionsgleichung (8) einen Anteil gasförmigen Kohlendioxids und/oder einen Anteil Wasserdampf enthalten. Es ist bevorzugt, dass das Synthesegas nach Austritt aus dem Auslass des Kathodenraums der Elektrolysezelle in Kohlenmonoxid und Wasserstoff einerseits und alle übrigen Stoffe andererseits aufgetrennt wird. Die übrigen Stoffe können vor allem Kohlendioxid und/oder Wasser sein. Das abgetrennte Kohlendioxid und/oder Wasser kann der Elektrolyse erneut zugeführt werden.

Es ist bevorzugt, dass der Anodenraum der Elektrolysezelle mit einem Spülgas gespült wird. Als Spülgas kommen beispielsweise Luft, Sauerstoff (O₂) und/oder Stickstoff (N₂) in Betracht. Durch das Spülgas kann der an der Anode gebildete Sauerstoff von der Anode weg geleitet werden. Der Partialdruck des Sauerstoffs an der Anode kann also gesenkt werden. Dadurch ist die für die Elektrolyse anzulegende Spannung zwischen Anode und Kathode geringer, wodurch Energie eingespart werden kann. Durch das Spülgas kann also der Wirkungsgrad gesteigert werden. Das Spülgas wird vorzugsweise auf eine Temperatur im Bereich von 700 bis 900 °C erwärmt, bevor es in den Anodenraum eingeleitet wird. Dadurch können thermische Spannungen innerhalb der Elektrolysezelle vermieden werden.

Gemäß einer bevorzugten Ausführungsform des Verfahrens ist das Eduktgas ein Biogas.

Unter Biogas ist ein Gas zu verstehen, dass aus Biomasse erhalten wurde, insbesondere durch Vergärung. Biogas kann beispielsweise in einer Biogasanlage erhalten werden, indem Biomasse, also organisches Material, unter Luftausschluss zersetzt wird. Das hier verwendete Biogas umfasst Methan und Kohlendioxid. Diese beiden Bestandteile sind üblicherweise die größten Bestandteile in Biogas. Daneben kann das Biogas auch beispielsweise Ammoniak, Sauerstoff, Schwefelwasserstoff, Stickstoff, Wasserdampf und/oder Wasserstoff umfassen.

Gemäß einer weiteren bevorzugten Ausführungsform des Verfahrens liegt ein Anteil des Methans im Eduktgas im Bereich von 50 bis 65 % und/oder liegt ein Anteil des Kohlendioxids im Eduktgas im Bereich von 30 bis 45 %.

Bevorzugt ist die Kombination, dass der Anteil des Methans im Eduktgas im Bereich von 50 bis 65 % liegt und der Anteil des Kohlendioxids im Eduktgas im Bereich von 30 bis 45 % liegt.

Es hat sich herausgestellt, dass mit einem derartigen Eduktgas ein besonders hoher Wirkungsgrad erzielt werden kann.

Gemäß einer weiteren bevorzugten Ausführungsform des Verfahrens umfasst das Eduktgas weiterhin Wasserdampf mit einem Anteil im Bereich von 2 bis 10 %.

In einem ersten Beispiel setzt sich das Eduktgas aus 55 % Methan, 40 % Kohlendioxid und 5 % Wasserdampf zusammen. Dies kann in Schritt b) ein Zwischenproduktgas bestehend aus 45 % Kohlendioxid und 55 % Wasserdampf ergeben. In Schritt c) kann daraus ein Synthesegas bestehend aus 45 % Kohlenmonoxid und 55 % Wasserstoff erhalten werden.

In einem zweiten Beispiel setzt sich das Eduktgas aus 60 % Methan, 35 % Kohlendioxid und 5 % Wasserdampf zusammen. Dies kann in Schritt b) ein Zwischenproduktgas bestehend aus 43 % Kohlendioxid und 57 % Wasserdampf ergeben. In Schritt c) kann daraus ein Synthesegas bestehend aus 43 % Kohlenmonoxid und 57 % Wasserstoff erhalten werden.

Die beiden Beispiele zeigen, dass durch die Zusammensetzung des Eduktgases die Zusammensetzung des Synthesegases beeinflusst werden kann. Sofern ein Biogas mit vorgegebener Zusammensetzung verwendet wird, kann daraus mit dem beschriebenen Verfahren ein entsprechendes Synthesegas erzeugt werden. Sofern dessen Zusammensetzung nicht der gewünschten Zusammensetzung entspricht, kann dem Synthesegas beispielsweise zusätzliches Kohlenmonoxid oder zusätzlicher Wasserstoff zugegeben werden. Dadurch kann auch trotz Veränderungen in der Zusammensetzung des Biogases kontinuierlich ein Synthesegas mit gleicher, gewünschter Zusammensetzung erhalten werden. Alternativ kann die Zusammensetzung des Eduktgases durch Zugabe entsprechender Bestandteile konstant gehalten werden.

Gemäß einer weiteren bevorzugten Ausführungsform des Verfahrens wird Schritt b) in einer Solid Oxide Fuel Cell, SOFC, durchgeführt.

Eine SOFC-Zelle ist eine Brennstoffzelle mit einem festen Elektrolyten, beispielsweise aus einer Oxidkeramik wie YSZ. Die Kathode besteht beispielsweise aus LSM. Die Anode ist beispielsweise als eine Ni-YSZ-Elektrode ausgebildet. Eine SOFC-Zelle wird vorzugsweise bei einer Temperatur im Bereich von 650 bis 1000 °C betrieben. Vorzugsweise wird die SOFC-Zelle für das beschriebene Verfahren mit der gleichen Temperatur betrieben wie die Elektrolysezelle, insbesondere im Bereich von 700 bis 850 °C. Dadurch können thermische Spannungen aufgrund von Temperaturunterschieden vermieden werden.

Es hat sich herausgestellt, dass mit einer SOFC-Zelle ein besonders hoher Wirkungsgrad erzielt werden kann.

Gemäß einer weiteren bevorzugten Ausführungsform des Verfahrens wird in Schritt b) erzeugte elektrische Energie für die Elektrolyse in Schritt c) verwendet.

Wie beschrieben sind bei dem beschriebenen Verfahren zwei chemische Prozesse miteinander gekoppelt: einerseits die Umsetzung des Eduktgases zum Zwischenproduktgas und andererseits die Umsetzung des Zwischenproduktgases zum Synthesegas. In der vorliegenden Ausführungsform sind die beiden Prozesse weiterhin dadurch miteinander gekoppelt, dass elektrische Energie, die in dem ersten Prozess erzeugt wird, im zweiten Prozess genutzt wird.

Dass in Schritt b) erzeugte elektrische Energie für die Elektrolyse in Schritt c) verwendet wird, bedeutet nicht, dass ausschließlich die in Schritt b) erzeugte elektrische Energie für die Elektrolyse in Schritt c) verwendet wird. In Versuchen konnte etwa ein Drittel des Energiebedarfs für die Elektrolyse durch die in Schritt b) erzeugte elektrische Energie gedeckt werden. Vorzugsweise, aber nicht notwendigerweise, wird die gesamte in Schritt b) erzeugte Energie für die Elektrolyse in Schritt c) verwendet. Dies gilt jedenfalls bis auf unvermeidliche Verluste.

Durch die elektrische Kopplung der beiden Prozesse wird der Bedarf an elektrischer Energie aus externen Quellen reduziert. Insoweit kann der Wirkungsgrad des Verfahrens gesteigert werden.

Als weiterer Aspekt der Erfindung wird eine Vorrichtung zur Herstellung eines Synthesegases umfassend Kohlenmonoxid und Wasserstoff vorgestellt, siehe Anspruch 5.

Die beschriebenen besonderen Vorteile und Ausgestaltungsmerkmale des Verfahrens sind auf die Vorrichtung anwendbar und übertragbar, und umgekehrt. Das beschriebene Verfahren wird vorzugsweise mit der beschriebenen Vorrichtung durchgeführt. Die beschriebene Vorrichtung ist vorzugsweise zur Durchführung des beschriebenen Verfahrens bestimmt und eingerichtet.

In der Brennstoffzelle wird erfindungsgemäß das Eduktgases zu dem Zwischenproduktgas umfassend Kohlendioxid und Wasserdampf umgesetzt (Schritt b)). In der Elektrolysezelle wird erfindungsgemäß das in Schritt b) erhaltenen Zwischenproduktgas durch Elektrolyse zu dem Synthesegas umfassend Kohlenmonoxid und Wasserstoff umgesetzt (Schritt c)). Dazu weist die Elektrolysezelle vorzugsweise eine Strom- und Spannungsquelle auf, mittels derer ein Strom zwischen Kathode und Anode angelegt werden kann. Die Elektrolysezelle ist vorzugsweise als eine Hochtemperatur-Elektrolysezelle ausgebildet.

Im Anodenraum der Brennstoffzelle kann ein Gas an der Anode der Brennstoffzelle entlang strömen. Weiterhin weist die Brennstoffzelle vorzugsweise einen Kathodenraum auf, der an die Kathode der Brennstoffzelle angrenzt. Im Kathodenraum der Brennstoffzelle kann ein Gas an der Kathode der Brennstoffzelle entlang strömen. Anodenraum und/oder Kathodenraum der Brennstoffzelle weisen vorzugsweise jeweils einen Einlass und einen Auslass auf.

Im Kathodenraum der Elektrolysezelle kann ein Gas an der Kathode der Elektrolysezelle entlang strömen. Weiterhin weist die Elektrolysezelle vorzugsweise einen Anodenraum auf, der an die Anode der Elektrolysezelle angrenzt. Im Anodenraum der Elektrolysezelle kann ein Gas an der Anode der Elektrolysezelle entlang strömen. Anodenraum und/oder Kathodenraum der Elektrolysezelle weisen vorzugsweise jeweils einen Einlass und einen Auslass auf.

Der Anodenraum der Brennstoffzelle ist mit dem Kathodenraum der Elektrolysezelle verbunden, vorzugsweise indem der Auslass des Anodenraums der Brennstoffzelle mit dem Einlass des Kathodenraums der Elektrolysezelle verbunden ist. Die Brennstoffzelle und die Elektrolysezelle können derart einstückig ausgebildet sein, dass die Brennstoffzelle ohne körperlich erkennbare Trennung in die Elektrolysezelle übergeht. Der Auslass des Anodenraums der Brennstoffzelle und der Einlass des Kathodenraums der Elektrolysezelle können als eine Verbindungsleitung zwischen dem Anodenraum der Brennstoffzelle und dem Kathodenraum der Elektrolysezelle ausgebildet sein. Die Verbindungsleitung kann einstückig mit dem Anodenraum der Brennstoffzelle und/oder mit dem Kathodenraum der Elektrolysezelle ausgebildet sein.

Gemäß einer bevorzugten Ausführungsform der Vorrichtung sind die Brennstoffzelle und die Elektrolysezelle derart miteinander verbunden, dass mit der Brennstoffzelle erzeugte elektrische Energie für eine Elektrolyse in der Elektrolysezelle genutzt werden kann.

Die Verbindung kann beispielsweise durch elektrische Leitungen ausgebildet sein. In dieser Ausführungsform kann in Schritt b) erzeugte elektrische Energie für die Elektrolyse in Schritt c) verwendet werden.

Gemäß einer weiteren bevorzugten Ausführungsform der Vorrichtung sind die Anode und die Kathode der Brennstoffzelle eingangsseitig an einen Speicher für elektrische Energie angebunden und/oder sind die Anode und die Kathode der Elektrolysezelle ausgangsseitig an den Speicher für elektrische Energie angebunden.

Auch in dieser Ausführungsform kann in Schritt b) erzeugte elektrische Energie für die Elektrolyse in Schritt c) verwendet werden. Dabei kann die mit der Brennstoffzelle erzeugte elektrische Energie im Speicher gespeichert werden. Die elektrische Energie muss also nicht unmittelbar nach ihrer Erzeugung verbraucht werden. Dadurch kann ein Energieverlust vermieden und der Wirkungsgrad insoweit gesteigert werden.

Der Speicher für elektrische Energie ist vorzugsweise als ein Akkumulator ausgebildet, also als ein wiederaufladbarer Speicher für elektrische Energie. Elektrische Energie kann von der Brennstoffzelle in den Speicher geleitet und im Speicher gespeichert werden. Dazu sind die Anode und die Katode der Brennstoffzelle eingangsseitig an den Speicher angebunden. In dem Speicher gespeicherte Energie kann an die Elektrolysezelle abgegeben werden. Dazu sind die Anode und die Katode der Elektrolysezelle ausgangsseitig an den Speicher angebunden. Bevorzugt ist die Kombination, dass die Anode und die Kathode der Brennstoffzelle eingangsseitig an einen Speicher für elektrische Energie angebunden sind und die Anode und die Kathode der Elektrolysezelle ausgangsseitig an den Speicher für elektrische Energie angebunden sind.

Gemäß einer weiteren bevorzugten Ausführungsform der Vorrichtung sind die Brennstoffzelle und die Elektrolysezelle gemeinsam in einem Gehäuse angeordnet.

Die Brennstoffzelle und Elektrolyse Zelle sind dann als gemeinsam in einem Gehäuse angeordnet aufzufassen, wenn jedenfalls Bereiche der Brennstoffzelle und der Elektrolysezelle, in denen die für das beschriebene Verfahren relevanten chemischen Reaktionen ablaufen, innerhalb des Gehäuses angeordnet sind. Das Gehäuse kann aus einem oder mehreren Teilen bestehen. Das Gehäuse kann Öffnungen haben, insbesondere für Zuleitungen, über die Gase der Brennstoffzelle und/oder der Elektrolysezelle zugeleitet werden können, und/oder für Ableitungen, über die Gase aus der Brennstoffzelle und/oder aus der Elektrolysezelle abgeleitet werden können.

Durch die gemeinsame Anordnung in einem Gehäuse kann ein besonders hoher Wirkungsgrad erzielt werden, indem die Brennstoffzelle und die Elektrolysezelle thermisch miteinander gekoppelt sind. Es ist besonders effizient, die Brennstoffzelle und die Elektrolysezelle gemeinsam auf Betriebstemperatur zu bringen und auf dieser zu halten. Vorzugsweise ist das Gehäuse thermisch isoliert. Zwischen der Brennstoffzelle und der Elektrolysezelle befindet sich vorzugsweise keine thermische Isolation.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Ablaufdiagramm eines erfindungsgemäßen Verfahrens zur Herstellung eines Synthesegases umfassend Kohlenmonoxid und Wasserstoff, und
- Fig. 2:: eine erfindungsgemäße Vorrichtung zur Herstellung eines Synthesegases umfassend Kohlenmonoxid und Wasserstoff.

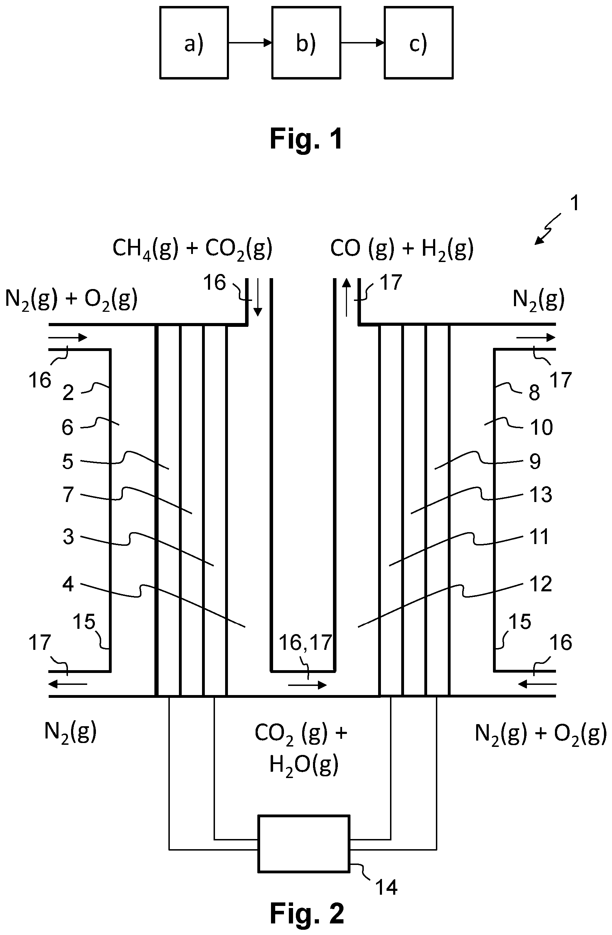

Fig. 1 zeigt ein Ablaufdiagramm eines Verfahrens zur Herstellung eines Synthesegases umfassend Kohlenmonoxid und Wasserstoff. Das Verfahren umfasst:
a) Bereitstellen eines Eduktgases umfassend Methan und Kohlendioxid,
b) Umsetzen des Eduktgases zu einem Zwischenproduktgas umfassend Kohlendioxid und Wasserdampf und
c) Umsetzen des in Schritt b) erhaltenen Zwischenproduktgases durch Elektrolyse zu dem Synthesegas umfassend Kohlenmonoxid und Wasserstoff.

Das Eduktgas ist vorzugsweise Biogas mit einem Methan-Anteil im Bereich von 50 bis 65 %, einem Kohlendioxid-Anteil im Bereich von 30 bis 45 % und einem Wasserdampf-Anteil im Bereich von 2 bis 10 %.

Fig. 2 zeigt eine Vorrichtung 1 zur Herstellung eines Synthesegases umfassend Kohlenmonoxid und Wasserstoff. Die Vorrichtung 1 umfasst eine als eine SOFC-Zelle ausgebildete Brennstoffzelle 2 mit einer Anode 3 und einer Kathode 5, die zumindest durch einen Elektrolyten 7 voneinander getrennt sind, sowie einem an die Anode 3 angrenzenden Anodenraum 4 und einem an die Kathode 5 angrenzenden Kathodenraum 6. Mit der Brennstoffzelle 2 kann Schritt b) des Verfahrens aus Fig. 1 durchgeführt werden. Weiterhin umfasst die Vorrichtung 1 eine Elektrolysezelle 8 mit einer Anode 9 und einer Kathode 11, die zumindest durch einen Elektrolyten 13 voneinander getrennt sind, sowie einem an die Kathode 11 angrenzenden Kathodenraum 12 und einem an die Anode 9 angrenzenden Anodenraum 10. Mit der Elektrolysezelle 8 kann Schritt c) des Verfahrens aus Fig. 1 durchgeführt werden.

Die beiden Kathodenräume 6 und 12 sowie die beiden Anodenräume 4 und 10 weisen jeweils einen Einlass 16 und einen Auslass 17 auf. Der Anodenraum 4 der Brennstoffzelle 8 ist mit dem Kathodenraum 12 der Elektrolysezelle 8 dadurch verbunden, dass der Auslass 17 des Anodenraums 4 der Brennstoffzelle 8 mit dem Einlass 16 des Kathodenraums 12 der Elektrolysezelle 8 verbunden ist. Über den Einlass 16 des Anodenraums 4 der Brennstoffzelle 2 kann das Eduktgas in den Anodenraum 4 der Brennstoffzelle 2 eingeleitet werden und insoweit gemäß Schritt a) des Verfahrens aus Fig. 1 bereitgestellt werden.

In den Einlass 16 des Kathodenraums 6 der Brennstoffzelle 2 kann Sauerstoff eingeleitet werden. In der gezeigten Ausführungsform wird der Sauerstoff, was nicht erforderlich ist, zusammen mit Stickstoff eingeleitet. Alternativ kann auch

Luft in den Einlass 16 des Kathodenraums 6 der Brennstoffzelle 2 eingeleitet werden. Am Auslass 17 des Kathodenraums 6 der Brennstoffzelle 2 kann der Stickstoff (beziehungsweise die verbrauchte Luft) aus dem Kathodenraums 6 der Brennstoffzelle 2 herausgelassen werden. Aus dem Auslass 17 des Kathodenraums 6 der Brennstoffzelle 2 kann auch nicht umgesetzter Sauerstoff austreten.

In den Einlass 16 des Anodenraums 10 der Elektrolysezelle 8 kann ein Spülgas eingeleitet und zusammen mit dem im Anodenraum 10 gebildeten Sauerstoff aus dem Auslass 17 des Anodenraums 10 herausgeleitet werden. In der gezeigten Ausführungsform ist das Spülgas Stickstoff. Alternativ kann aber insbesondere auch Sauerstoff als Spülgas verwendet werden.

Die Brennstoffzelle 2 und die Elektrolysezelle 8 sind derart miteinander verbunden, dass mit der Brennstoffzelle 2 erzeugte elektrische Energie für eine Elektrolyse in der Elektrolysezelle 8 genutzt werden kann. Dazu sind die Anode 3 und die Kathode 5 der Brennstoffzelle 2 eingangsseitig an einen Speicher 14 für elektrische Energie angebunden und die Anode 9 und die Kathode 11 der Elektrolysezelle 8 ausgangsseitig an den Speicher 14 für elektrische Energie angebunden.

Die Brennstoffzelle 2 und die Elektrolysezelle 8 sind gemeinsam in einem Gehäuse 15 angeordnet.

Mit dem beschriebenen Verfahren und mit der beschriebenen Vorrichtung 1 kann ein Synthesegas mit Kohlendioxid und Wasserstoff mit besonders hohem Wirkungsgrad aus Biogas erhalten werden. Dazu ist die Umsetzung des Biogases in einer Brennstoffzelle 2 mit einer Co-Elektrolyse in einer Elektrolysezelle 8 gekoppelt.

### Bezugszeichenliste

1 Vorrichtung
2 Brennstoffzelle
3 Anode der Brennstoffzelle
4 Anodenraum der Brennstoffzelle
5 Kathode der Brennstoffzelle
6 Kathodenraum der Brennstoffzelle
7 Elektrolyt der Brennstoffzelle
8 Elektrolysezelle
9 Anode der Elektrolysezelle
10 Anodenraum der Elektrolysezelle
11 Kathode der Elektrolysezelle
12 Kathodenraum der Elektrolysezelle
13 Elektrolyt der Elektrolysezelle
14 Speicher für elektrische Energie
15 Gehäuse
16 Einlass
17 Auslass

## Patentansprüche

1. Verfahren zur Herstellung eines Synthesegases umfassend Kohlenmonoxid und Wasserstoff, **dadurch gekennzeichnet, dass** das Verfahren umfasst:
a) Bereitstellen eines Eduktgases umfassend Methan und Kohlendioxid,
b) Umsetzen des Eduktgases zu einem Zwischenproduktgas umfassend Kohlendioxid und Wasserdampf und
c) Umsetzen des in Schritt b) erhaltenen Zwischenproduktgases durch Elektrolyse zu dem Synthesegas umfassend Kohlenmonoxid und Wasserstoff.

2. Verfahren nach Anspruch 1, wobei das Eduktgas ein Biogas ist.

3. Verfahren nach einem der vorstehenden Ansprüche, wobei Schritt b) in einer Solid Oxide Fuel Cell, SOFC, durchgeführt wird.

4. Verfahren nach einem der vorstehenden Ansprüche, wobei in Schritt b) erzeugte elektrische Energie für die Elektrolyse in Schritt c) verwendet wird.

5. Vorrichtung (1) zur Herstellung eines Synthesegases umfassend Kohlenmonoxid und Wasserstoff, wobei die Vorrichtung (1) umfasst:
- eine Brennstoffzelle (2) mit einer Anode (3) und einer Kathode (5), die zumindest durch einen Elektrolyten (7) voneinander getrennt sind, sowie einem an die Anode (3) angrenzenden Anodenraum (4),
**dadurch gekennzeichnet, dass** die Vorrichtung umfasst:
- eine Elektrolysezelle (8) mit einer Anode (9) und einer Kathode (11), die zumindest durch einen Elektrolyten (13) voneinander getrennt sind, sowie einem an die Kathode (11) angrenzenden Kathodenraum (12),
wobei der Anodenraum (4) der Brennstoffzelle (2) mit dem Kathodenraum (12) der Elektrolysezelle (8) verbunden ist,
wobei die Brennstoffzelle (2) dazu eingerichtet ist, ein Eduktgas umfassend Methan und Kohlendioxid zu einem Zwischenproduktgas umfassend Kohlendioxid und Wasserdampf umzusetzen, und wobei die Elektrolysezelle (8) dazu eingerichtet ist, das mit der Brennstoffzelle (2) erhaltenen Zwischenproduktgas durch Elektrolyse zu dem Synthesegas umfassend Kohlenmonoxid und Wasserstoff umzusetzen.

6. Vorrichtung (1) nach Anspruch 5, wobei die Brennstoffzelle (2) und die Elektrolysezelle (8) derart miteinander verbunden sind, dass mit der Brennstoffzelle (2) erzeugte elektrische Energie für eine Elektrolyse in der Elektrolysezelle (8) genutzt werden kann.

7. Vorrichtung (1) nach Anspruch 5 oder 6, wobei die Anode (3) und die Kathode (5) der Brennstoffzelle (2) eingangsseitig an einen Speicher (14) für elektrische Energie angebunden sind und/oder die Anode (9) und die Kathode (11) der Elektrolysezelle (8) ausgangsseitig an den Speicher (14) für elektrische Energie angebunden sind.

8. Vorrichtung (1) nach einem der Ansprüche 5 bis 7, wobei die Brennstoffzelle (2) und die Elektrolysezelle (8) gemeinsam in einem Gehäuse (15) angeordnet sind.

## Claims

1. Process for producing a synthesis gas comprising carbon monoxide and hydrogen, **characterized in that** the process comprises:
a) providing a reactant gas comprising methane and carbon dioxide,
b) reacting the reactant gas to give an intermediate gas comprising carbon dioxide and water vapour, and
c) reacting the intermediate gas obtained in step b) by electrolysis to give the synthesis gas comprising carbon monoxide and hydrogen.

2. Process according to Claim 1, wherein the reactant gas is a biogas.

3. Process according to either of the preceding claims, wherein step b) is carried out in a solid oxide fuel cell, SOFC.

4. Process according to any of the preceding claims, wherein electrical energy generated in step b) is used for the electrolysis in step c).

5. Apparatus (1) for producing a synthesis gas comprising carbon monoxide and hydrogen, wherein the apparatus (1) comprises:
- a fuel cell (2) with an anode (3) and a cathode (5) separated from each other at least by an electrolyte (7), and an anode chamber (4) adjacent to the anode (3),
**characterized in that** the apparatus comprises:
- an electrolysis cell (8) with an anode (9) and a cathode (11) separated from each other at least by an electrolyte (13), and a cathode chamber (12) adjacent to the cathode (11),
wherein the anode chamber (4) of the fuel cell (2) is connected to the cathode chamber (12) of the electrolysis cell (8),
wherein the fuel cell (2) is adapted to react a reactant gas comprising methane and carbon dioxide to give an intermediate gas comprising carbon dioxide and water vapour, and wherein the electrolysis cell (8) is adapted to react the intermediate gas obtained with the fuel cell (2) by electrolysis to give the synthesis gas comprising carbon monoxide and hydrogen.

6. Apparatus (1) according to Claim **5,** wherein the fuel cell (2) and the electrolysis cell (8) are connected to each other in such a way that electrical energy generated with the fuel cell (2) can be utilized for electrolysis in the electrolysis cell (8).

7. Apparatus (1) according to Claim 5 or **6,** wherein the anode (3) and the cathode (5) of the fuel cell (2) are connected on the input side to a store (14) for electrical energy and/or the anode (9) and the cathode (11) of the electrolysis cell (8) are connected on the output side to the store (14) for electrical energy.

8. Apparatus (1) according to any of Claims 5 to 7, wherein the fuel cell (2) and the electrolysis cell (8) are arranged together in a housing (15).

## Revendications

1. Procédé de préparation d'un gaz de synthèse comprenant du monoxyde de carbone et de l'hydrogène, **caractérisé en ce que** le procédé comprend :
a) la mise à disposition d'un gaz de départ comprenant du méthane et du dioxyde de carbone,
b) la transformation du gaz de départ en un gaz produit intermédiaire comprenant du dioxyde de carbone et de la vapeur d'eau et
c) la transformation par électrolyse du gaz produit intermédiaire obtenu dans l'étape b) en gaz de synthèse comprenant du monoxyde de carbone et de l'hydrogène.

2. Procédé selon la revendication 1, le gaz de départ étant un biogaz.

3. Procédé selon l'une des revendications précédentes, l'étape b) étant réalisée dans une pile à combustible à oxyde solide, SOFC (Solid Oxide Fuel Cell).

4. Procédé selon l'une des revendications précédentes, l'énergie électrique générée dans l'étape b) étant utilisée pour l'électrolyse dans l'étape c).

5. Dispositif (1) pour la préparation d'un gaz de synthèse comprenant du monoxyde de carbone et de l'hydrogène, le dispositif (1) comprenant :
- une pile à combustible (2) présentant une anode (3) et une cathode (5), qui sont séparées l'une de l'autre au moins par un électrolyte (7), ainsi qu'une chambre anodique (4) adjacente à l'anode (3),
**caractérisé en ce que** le dispositif comprend :
- une cellule d'électrolyse (8) présentant une anode (9) et une cathode (11), qui sont séparées l'une de l'autre au moins par un électrolyte (13), ainsi qu'une chambre cathodique (12) adjacente à la cathode (11),
la chambre anodique (4) de la pile à combustible (2) étant reliée à la chambre cathodique (12) de la cellule d'électrolyse (8),
la pile à combustible (2) étant conçue pour transformer un gaz de départ, comprenant du méthane et du dioxyde de carbone, en un gaz produit intermédiaire, comprenant du dioxyde de carbone et de la vapeur d'eau, et la cellule d'électrolyse (8) étant conçue pour transformer par électrolyse le gaz produit intermédiaire obtenu à l'aide de la pile à combustible (2) en gaz de synthèse comprenant du monoxyde de carbone et de l'hydrogène.

6. Dispositif (1) selon la revendication 5, la pile à combustible (2) et la cellule d'électrolyse (8) étant reliées l'une à l'autre de telle sorte que l'énergie électrique générée à l'aide de la pile à combustible (2) peut être utilisée pour une électrolyse dans la cellule d'électrolyse (8).

7. Dispositif (1) selon la revendication 5 ou **6,** l'anode (3) et la cathode (5) de la pile à combustible (2) étant reliées côté entrée à un accumulateur (14) d'énergie électrique et l'anode (9) et la cathode (11) de la cellule d'électrolyse (8) étant reliées côté sortie à l'accumulateur (14) d'énergie électrique.

8. Dispositif (1) selon l'une des revendications 5 à 7, la pile à combustible (2) et la cellule d'électrolyse (8) étant agencées ensemble dans un boîtier (15).
